# EUROPEAN PATENT SPECIFICATION

(11) **EP 3 049 293 B1**
(45) Date of publication and mention of the grant of the patent: **15.07.2020**
(21) Application number: 14849040.2
(22) Date of filing: 17.09.2014
(51) Int. Cl.: B60T 8/171, F16C 41/00, G01P 3/481, B60B 27/00, B60B 27/02

(54) **SENSOR RETAINER DEVICE WITH A RETAINER PORTION FOR ABS SENSOR MEANS PERTAINING TO A WHEEL SUSPENSION FOR A VEHICLE**
SENSORHALTEVORRICHTUNG MIT EINEM HALTERUNGSTEIL FÜR ABS-SENSORMITTEL FÜR EINE FAHRZEUGRADFEDERUNG
DISPOSITIF DE RETENUE DE CAPTEUR COMPRENANT UNE PARTIE DE RETENUE POUR MOYEN DE CAPTEUR ABS RELATIF À UNE SUSPENSION DE ROUE POUR UN VÉHICULE

(30) Priority: 27.09.2013 SE 1351122
(43) Date of publication of application: 03.08.2016
(73) Proprietor: Scania CV AB, 151 87 Södertälje (SE)
(72) Inventor: BERNSTRÖM, Anette, S-149 91 Nynäshamn (SE); LINDQVIST, Arne, S-152 57 Södertälje (SE); ANDERSSON, Christofer, S-120 50 Årsta (SE)
(74) Representative: Scania CV AB
(86) International application number: PCT/SE2014/051074
(87) International publication number: WO 2015/047164

(56) References cited:
- EP-A2- 2 583 873
- WO-A1-2009/142574
- DE-A1- 4 230 012
- DE-A1- 19 932 585
- DE-A1-102007 056 340
- JP-A- 2006 153 504
- JP-A- 2007 003 542
- JP-A- 2010 106 924
- KR-A- 20100 093 767

## Description

### Technical field

The present invention relates to a sensor retainer device with a retainer portion for ABS sensor means pertaining to a wheel suspension for a vehicle according to the preamble of claim 1. The invention relates also to a motor vehicle with a sensor retainer device with a retainer portion for ABS sensor means according to claim 10.

### Background to the invention and prior art

A wheel suspension for a vehicle comprises a non-rotating shaft with a shaft journal fitted with a wheel bearing unit on which a hub is fitted. A vehicle wheel with a rim and a tyre and a brake disc may be fitted to the hub in such a way that the wheel and the brake disc rotate about the shaft journal when the vehicle is in motion. When the vehicle is braked, brake blocks are pressed against the sides of the brake disc, thereby braking the wheel's rotation and hence also the vehicle. Particularly on slippery road surfaces it is desirable that vehicle wheels should not lock upon braking, as this would lead to a longer braking distance while at the same time the driver may lose the possibility of steering the vehicle past any obstacles on the road.

To prevent vehicle wheels from locking upon sharp braking, vehicles are often provided with ABS brake systems which comprise ABS sensors associated with each wheel, making it possible for the force applied to the vehicle's brakes to be controlled and limited. Repeated braking within a short period of time will result in the brake disc developing a great deal of heat which passes to nearby components by forced convection, which means that an external air flow may carry the air further towards heat-sensitive components. This leads to problems on vehicles with disc brakes in that the ABS sensor, which is usually situated close to a brake disc, may cease to function when subject to high temperatures, leading to the ABS brake system being out of action and the consequent possibility of the brakes locking upon sharp braking. To reduce the risk of the ABS sensors being subject to high temperatures, they are fitted in such a way as to be as far as possible exposed to the cooling effect of the draught caused by movement of the vehicle. This draught results in an air flow through the region where the ABS sensors are situated, and this air flow limits the radiant heat from the brake discs and nearby warm parts and also carries warm air away from the region where the ABS sensors are situated.

When the vehicle is travelling at low speed and/or in intermittent operation where it alternately moves and is braked, as when queuing in traffic, the draught and hence also the air flow through the regions where the ABS sensors are situated are limited at a time when the brake discs may be very warm. Such limited air flow as may still prevail may well divert heat from the brake discs and other warm parts towards sensitive parts of the ABS sensors but not be sufficient to remove the heat from the region where the ABS sensors are situated. Sensitive parts of the ABS sensors may thus risk being damaged, potentially putting the ABS brake system out of action.

EP 2583873 A2 relates to a gear component with a shaft and an electrical component (e.g. ABS-sensor) which is arranged proximate to a brake disc. The electrical component comprises shaft-shaped portion and a connecting portion for connecting an electrical cable. The shaft-shaped portion is accommodated in a sleeve-shaped portion of a heat shield. The heat shield is provided with a connecting portion of the electrical component associated with a collar-shaped portion which is arranged at a preset spacing with the connecting portion.

SE 535426 refers to a retainer device for ABS sensor means. The sensor retainer device comprises a circular element configured to be associated with a shaft journal of a motor vehicle, and means for fixing the position of the sensor means in the axial and circumferential directions. The fixing is by means of a clamping arrangement. There is no reference to anything which would prevent warm air from flowing or blowing towards the ABS sensor. US 2006/0124411 notes that there may be a great deal of heat in the region round an ABS sensor and that protection against the action of heat is necessary. It describes this protection in the form of a protective layer applied to a toothed wheel to withstand extreme heat during use. Such protection does however not prevent warm air from flowing or blowing towards an ABS sensor.

DE 4230012 refers to another solution whereby toothed wheels are in contact with cooling ribs to solve heat problems. It likewise does not propose a solution which would prevent warm air from flowing or blowing towards an ABS sensor.

### Summary of the invention

One object of the present invention is to prevent ABS sensor means from being subject to harmful thermal radiation and harmful warm air flows. To this end, the invention is distinguished by what is indicated in the independent claims 1 and 11.

The fact that a sensor retainer device according to claim 1 has the characteristics that sensor retainer portion comprises at least one protruding portion in the form of an air deflector which extends along an internal section of, and at a distance from, the brake disc and serves as a screen between the brake disc and the ABS sensor means achieves the advantage that harmful thermal radiation and harmful warm air flows generated by the brake disc will not reach sensitive parts of an ABS sensor but will pass out over the air deflector from the region where the ABS sensor is situated. Sensitive parts of the ABS sensor are thereby significantly better protected than in previous known solutions.

According to the invention, the sensor retainer portion is an integral part of a spacing ring situated in the wheel suspension between the wheel bearing unit and the shaft journal. This achieves the advantage that fitting a sensor retainer on the vehicle will be easy and quick, since the spacing ring is slid onto the shaft and is clamped axially between the wheel bearing unit and the shaft journal, avoiding access difficulties in relation to fastening means or welding or the like.

Other features distinguishing the invention are indicated by the dependent claims and the description set out below of embodiments exemplifying the invention.

### Brief description of the drawings

Preferred embodiments of the invention are described below by way of examples with reference to the attached drawings, in which
Figure 1 depicts a side view of a motor vehicle,
Figure 2 depicts schematically a longitudinal section of a wheel suspension device for the vehicle,
Figure 3 depicts schematically a sensor retainer device according to an embodiment of the invention,
Figure 4 depicts schematically a sensor retainer device according to a further embodiment of the invention.

### Detailed description of preferred embodiments of the invention

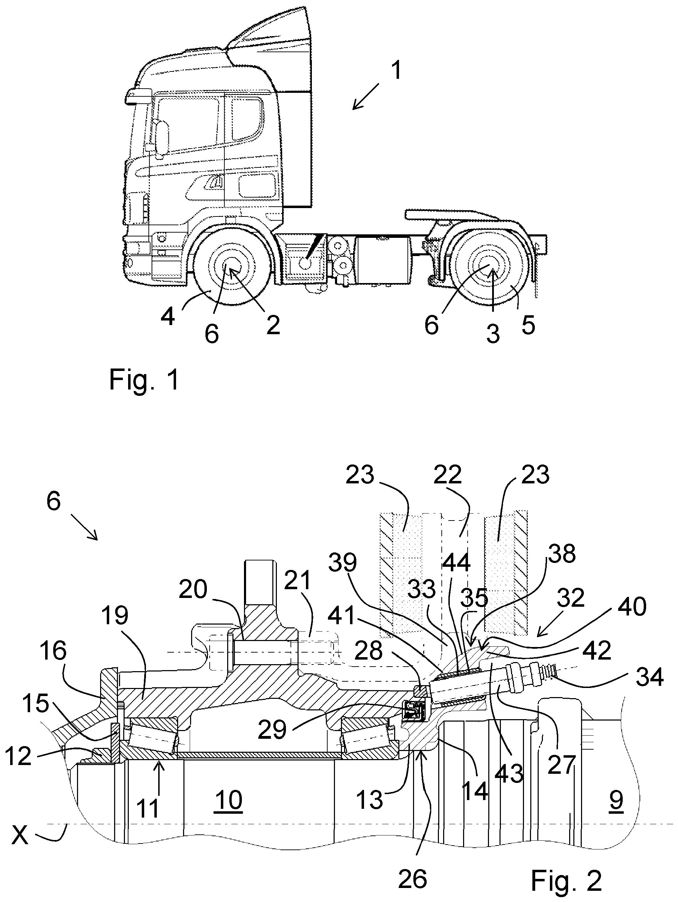

Figure 1 depicts a side view of a motor vehicle 1 according to the present invention. The vehicle has a forward wheelshaft 2 and a rear wheelshaft 3, each with two or more wheels 4, 5. Each wheelshaft 2, 3 extends transversely to the vehicle and has a wheel suspension device 6 at each of its end portions The vehicle exemplified is a heavy vehicle in the form of a truck. It may alternatively be a bus or a car and is provided with a retainer device for ABS sensor means according to the present invention.

Figure 2 depicts schematically a cross-sectional view of a wheel suspension device 6 for the vehicle 1, comprising a non-rotatable shaft 9 with a shaft journal 10 and, fitted on the shaft journal, a wheel bearing unit 11. The wheel bearing unit is preferably provided with ball bearings or rolling bearings. The wheel bearing unit is locked axially on the shaft journal 10 by a ring nut 12 which presses the wheel bearing unit towards an annular spacing ring 13 which runs round the shaft journal and is adapted to abutting against a shoulder 14 on the shaft journal. The spacing ring 13 is fastened to the shaft journal by a pressing procedure, a shrinking procedure or in some other way, e.g. by some form of clamping connection or threaded connection, and is thus not arranged for rotation but firmly connected to the shaft journal. In an alternative embodiment the spacing ring is prevented from rotating about the shaft journal by the clamping force exerted by the ring nut 12 on the wheel bearing unit and hence also on the spacing means 13. A washer 15 of a conventional kind is provided between the ring nut 12 and the wheel bearing unit 11, and a hub cap 16 is provided to cover the end portion of the shaft journal, inter alia to protect the wheel bearing unit from external influences.

The wheel suspension device 6 further comprises a hub 19 which is fastened to the wheel bearing unit 11 and to which an undepicted vehicle wheel may be fitted by means of undepicted fastening elements in the form of screws or the like. The hub further comprises recesses 20 for fastening elements 21 in the form of screws or the like by which a brake disc 22 may be fitted to the hub. The hub, the vehicle wheel associated with it and the brake disc are arranged in the wheel suspension device in such a way that they rotate relative to the shaft journal 10 about the centreline X of the shaft journal when the vehicle is in motion. When the vehicle is braked, brake blocks 23 are pressed against the sides of the brake disc 22, thereby braking said rotation and hence also the vehicle. Repeated braking over a short period of time will result in substantial warming of the brake disc, with consequent generation of conductive heat and radiant heat which reach nearby components and give rise to forced convection in that an external air flow may carry the air further towards heat-sensitive components.

A sensor retainer device 26 for ABS sensor means 27 is firmly attached relative to the shaft journal 10 and extends between the shaft journal and the rotatable hub 19 and a toothed wheel 28 which rotates with the hub, causing the sensor retainer device 26 to keep the sensor means 27 substantially radially in line with and at an axial distance from the toothed wheel 28 for wheel speed monitoring. A hub seal 29 is provided between the firmly attached sensor retainer device 26 and the rotatable hub 19, to keep lubricant in the form of oil or grease in place to lubricate the wheel bearing unit 11.

The sensor retainer device 26 comprises a sensor retainer portion 32 which has running through it a hole 33 to serve as fastening hole for the sensor means 27, which has a substantially cylindrical shape and is connected by lines 34 to undepicted brake regulating means. A bushing 35 which surrounds the sensor means 27 is provided between the sensor means and the hole 33. The sensor means extends through the bushing, or through the hole 33 in cases where there is no bushing, and is connected to the retainer portion 32 in a suitable way, e.g. by press fit or by some form of conventional fastening means.

The sensor retainer portion 32 comprises at least one protruding portion in the form of an air deflector 38 which extends along an inner section 39 of, and at a distance from, the brake disc 22 and thus serves as a screen between the brake disc and the sensor means 27. The air deflector comprises an elongate portion 40 with a first element 41 and a second element 42, which second element is adapted to extending over a section of the sensor means 27 which protrudes from the retainer portion 32 and delineates a gap 43 between the air deflector 38 and the sensor means 27. The elongate portion 40 is shell-like with a convex surface 44 adapted to facing away from the hub 19 and towards the brake disc 22. Air flows arising will be guided away from the sensor means by the convex surface 44.

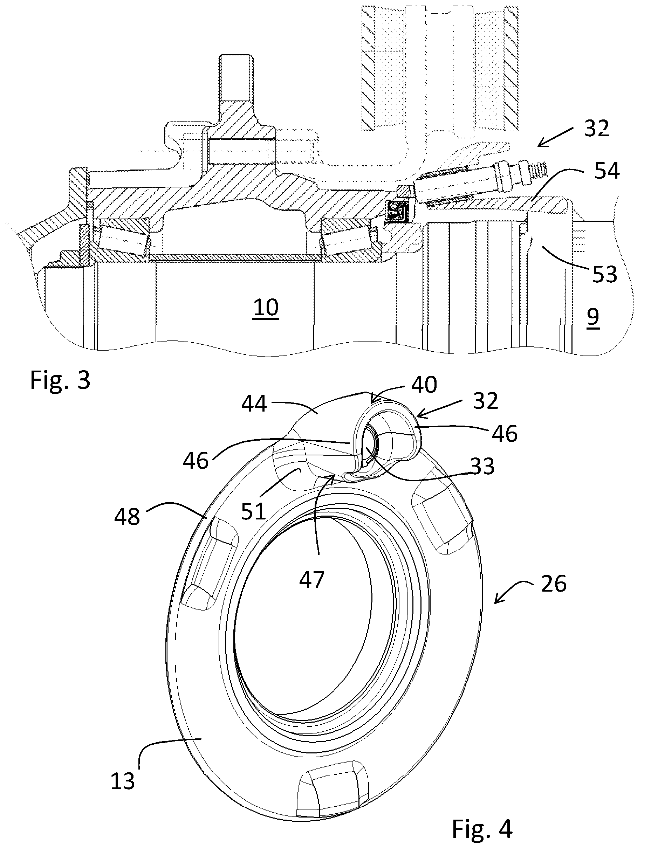

In Figure 4, which is a perspective view of the sensor retainer device 26 depicted in Figure 2, it may be seen that the retainer portion 32 has an elongate shell-like portion 40 with a convex surface 44, but also that the shell-like portion is semicircular with side portions 46 which extend away from the brake disc 22. For greater clarity the drawing shows only the fastening hole 33 of the sensor means 27 but not the sensor means itself. It shows the side portions 46 extending past the fastening hole, to protect the side portions when the sensor means is placed in the fastening hole.

In the embodiment depicted in Figures 2 and 4 the sensor retainer portion 32 is an integral part of the spacing ring 13 and takes the form of a radially protruding portion 47 of the ring's radially outer part 48. A neck portion 51 connects in this case the spacing ring 13 to the sensor retainer portion 32 to form a single sensor retainer device 26.

In an alternative embodiment depicted in Figure 3, the sensor retainer portion 32 is associated, via a bracket 54, with a radially protruding flange 53 on the shaft 9, although it is also possible for the retainer portion and this bracket to be associated with the shaft journal 10.

The bracket may be connected to the shaft 9 or the shaft journal 10 by conventional fastening means such as threaded connections or by welding or the like.

In an undepicted further alternative embodiment the sensor retainer portion 32 is an integral part of an annular means which runs round the shaft journal 10 or the shaft 9 but does not take the form of a spacing means. In such an embodiment the annular means will be connected at a suitable location along the shaft journal 10 or the shaft 9 by a pressing procedure, a shrinking procedure or in some other way, e.g. by some form of clamping connection or threaded connection.

When the vehicle is in motion, the resulting draught will give rise to an air flow through the region where the sensor means 27 is situated, and this air flow will limit the conductive heat and radiant heat from the brake disc 22 and nearby warm parts and also carry warm air away from the region where the sensor means is situated. The heat-diverting effect is enhanced by the air deflector 38.

When the vehicle is travelling at low speed and/or in intermittent operation where it alternatively moves and is braked, as when queuing in traffic, the draught and hence also the air flow through the region where the sensor means 27 is situated will be limited at a time when the brake disc 22 may be very warm. Such limited air flow as still prevails will divert heat from the brake disc and other warm parts but not carry towards sensitive parts of the sensor means the heat which in prior art without the warm air flow would pass out over the air deflector 38 from the region where the sensor means is situated. Sensitive parts of the sensor means are thus significantly better protected than in previous known solutions.

The invention is of course not restricted to the embodiments described above, as numerous possibilities for modifications of them are likely to be obvious to one skilled in the art wihtout having to depart from the invention's basic concept such as defined in the attached claims.

## Claims

1. A sensor retainer device with a retainer portion (32) for ABS sensor means (27) pertaining to a wheel suspension (6) for a vehicle (1), the suspension comprising a non-rotatable shaft (9) with a shaft journal (10) and, mounted on the shaft journal (10), a wheel bearing unit (11) about which a hub (19) which has a brake disc (22) associated with it is arranged to be rotatable, wherein the sensor retainer portion (32) comprises at least one protruding portion in the form of an air deflector (38) which, when in use, extends along an internal section (39) of, and at a distance from, the brake disc (22) and serves as a screen between the brake disc (22) and the ABS sensor means (27) **characterised in that** a spacing ring (13) is provided to be arranged between the wheel bearing unit (11) and the shaft journal (10) and that the sensor retainer portion (32) is an integral part of the spacing ring (13).

2. A sensor retainer device according to claim 1, **characterised in that** the air deflector (38) comprises an elongate portion (40) with a convex surface (44) which, when in use, is directed away from the hub (19) and towards the brake disc (22).

3. A sensor retainer device according to claim 2, **characterised in that** the elongate portion (40) comprises a first element (41) and a second element (42), which second element (42) is arranged to extend over a section of the ABS sensor means (27) which protrudes from the sensor retainer portion (32) and delineates a gap (43) between the air deflector (38) and the ABS sensor means (27).

4. A sensor retainer device according to either of claims 2 and 3, **characterised in that** the elongate portion (40) is shell-like and in one cross-section is semicircular with side portions (46) which, when in use, extend away from the brake disc (22),

5. A sensor retainer device according to claim 1, **characterised in that** the sensor retainer portion (32) takes the form of a radially protruding portion of the radially outer part of the spacing ring.

6. A sensor retainer device according to either of claims 1 and 5, **characterised in that** the spacing ring (13) and the sensor retainer portion (32) are connected to one another via a neck portion to form a single sensor retainer device (26).

7. A sensor retainer device according to claim 1, **characterised in that** the spacing ring (13) is annular and runs round the shaft journal (10).

8. A sensor retainer device according to claim 7, **characterised in that** the spacing ring (13) is to be arranged to abut against a shoulder (14) on the shaft journal (10).

9. A sensor retainer device according to claims 7-8, **characterised in that** the spacing ring (13) is connected firmly to the shaft journal (10).

10. A vehicle provided with a sensor retainer device (26) according to any one of claims 1-9.

## Patentansprüche

1. Sensorhaltevorrichtung mit einem Halterungsteil (32) für ABS-Sensormittel (27) für eine Radaufhängung (6) für ein Fahrzeug (1), wobei die Aufhängung eine nicht drehbare Welle (9) mit einem Wellenzapfen (10) und einer auf dem Wellenzapfen (10) angebrachten Radlagereinheit (11) umfasst, um die herum eine Nabe (19) mit einer zugehörigen Bremsscheibe (22) drehbar angeordnet ist, wobei das Sensorhalterungsteil (32) wenigstens einen vorstehenden Teilbereich in Gestalt eines Luftabweisers (38) aufweist, der im Gebrauch entlang eines inneren Abschnitts (39) der Bremsscheibe (22) und mit Abstand davon verläuft und als eine Abschirmung zwischen der Bremsscheibe (22) und den ABS-Sensormitteln (27) dient,
**dadurch gekennzeichnet, dass** ein Distanzring (13) dazu vorgesehen ist, zwischen der Radlagereinheit (11) und dem Wellenzapfen (10) angeordnet zu werden, und dass das Sensorhalterungsteil (32) ein integraler Bestandteil des Distanzrings (13) ist.

2. Sensorhaltevorrichtung nach Anspruch 1,
**dadurch gekennzeichnet, dass** der Luftabweiser (38) einen länglichen Teil (40) mit einer konvexen Oberfläche (44) aufweist, die im Gebrauch von der Nabe (19) weg und zur Bremsscheibe (22) hin gerichtet ist.

3. Sensorhaltevorrichtung nach Anspruch 2,
**dadurch gekennzeichnet, dass** der längliche Teil (40) einen ersten Bestandteil (41) und einen zweiten Bestandteil (42) aufweist, wobei der zweite Bestandteil (42) dazu angeordnet ist, sich über einen Abschnitt der ABS-Sensormittel (27) zu erstrecken, der aus dem Sensorhalterungsteil (32) herausragt und einen Spalt (43) zwischen dem Luftabweiser (38) und den ABS-Sensormitteln (27) abgrenzt.

4. Sensorhaltevorrichtung nach Anspruch 2 oder 3,
**dadurch gekennzeichnet, dass** das längliche Teil (40) schalenartig und in einem Querschnitt halbkreisförmig ist, mit Seitenteilen (46), die sich im Gebrauch von der Bremsscheibe (22) weg erstrecken.

5. Sensorhaltevorrichtung nach Anspruch 1,
**dadurch gekennzeichnet, dass** das Sensorhalterungsteil (32) die Gestalt eines radial vorstehenden Teilbereichs des radial äußeren Teils des Distanzrings hat.

6. Sensorhaltevorrichtung nach einem der Ansprüche 1 oder 5,
**dadurch gekennzeichnet, dass** der Distanzring (13) und das Sensorhalterungsteil (32) über ein Halsteil miteinander verbunden sind, um eine einzige Sensorhaltevorrichtung (26) zu bilden.

7. Sensorhaltevorrichtung nach Anspruch 1,
**dadurch gekennzeichnet, dass** der Distanzring (13) ringförmig ist und um den Wellenzapfen (10) herum verläuft.

8. Sensorhaltevorrichtung nach Anspruch 7,
**dadurch gekennzeichnet, dass** der Distanzring (13) dazu angeordnet ist, an einer Schulter (14) am Wellenzapfen (10) anzuliegen.

9. Sensorhaltevorrichtung nach Anspruch 7 oder 8,
**dadurch gekennzeichnet, dass** der Distanzring (13) fest mit dem Wellenzapfen (10) verbunden ist.

10. Fahrzeug, das mit einer Sensorhaltevorrichtung (26) nach einem der Ansprüche 1 bis 9 ausgerüstet ist.

## Revendications

1. Dispositif de retenue de capteur avec une partie de retenue (32) pour des moyens de capteur ABS (27) se rapportant à une suspension de roue (6) pour un véhicule (1), la suspension comprenant un arbre non rotatif (9) avec un tourillon d'arbre (10) et, monté sur le tourillon d'arbre (10), une unité de roulement de roue (11) autour de laquelle un moyeu (19) auquel est associé un disque de frein (22) est agencé pour être rotatif, dans lequel la partie de retenue de capteur (32) comprend au moins une partie en saillie sous la forme d'un déflecteur d'air (38) qui, lorsqu'il est utilisé, s'étend le long d'une section interne du (39), et à une distance du, disque de frein (22) et sert d'écran, entre le disque de frein (22) et le moyen capteur ABS (27), **caractérisé en ce qu'**un anneau d'espacement (13) est fourni pour être agencé entre l'unité de roulement de roue (11) et le tourillon d'arbre (10) et que la partie de retenue du capteur (32) fait partie intégrante de l'anneau d'espacement (13).

2. Dispositif de retenue de capteur selon la revendication 1, **caractérisé en ce que** le déflecteur d'air (38) comprend une partie allongée (40) avec une surface convexe (44) qui, lorsqu'il est utilisé, est dirigé loin du moyeu (19) et vers le disque de frein (22).

3. Dispositif de retenue de capteur selon la revendication 2, **caractérisé en ce que** la partie allongée (40) comprend un premier élément (41) et un deuxième élément (42), lequel deuxième élément (42) est agencé pour étendre sur une section du moyen de capteur ABS (27) qui fait saillie de la partie de retenue de capteur (32) et délimite un écart (43) entre le déflecteur d'air (38) et le moyen de capteur ABS (27).

4. Dispositif de retenue de capteur selon l'une quelconque des revendications 2 et 3, **caractérisé en ce que** la partie allongée (40) est de type coquille et dans une coupe transversale est semi-circulaire avec des parties latérales (46) qui, lorsqu'elles sont utilisées, s'éloignent du disque de frein (22).

5. Dispositif de retenue de capteur selon la revendication 1, **caractérisé en ce que** la partie de retenue de capteur (32) prend la forme d'une partie de saillie radialement de la partie radialement externe de l'anneau d'espacement.

6. Dispositif de retenue de capteur selon l'une quelconque des revendications 1 et 5, **caractérisé en ce que** l'anneau d'espacement (13) et la partie de retenue de capteur (32) sont reliés l'un à l'autre via une partie de col pour former un dispositif de retenue de capteur unique (26).

7. Dispositif de retenue de capteur selon la revendication 1, **caractérisé en ce que** l'anneau d'espacement (13) est annulaire et entoure le tourillon d'arbre (10).

8. Dispositif de retenue de capteur selon la revendication 7, **caractérisé en ce que** l'anneau d'espacement (13) doit être agencée pour venir en butée contre un épaulement (14) sur le tourillon d'arbre (10).

9. Dispositif de retenue de capteur selon les revendications 7-8, **caractérisé en ce que** l'anneau d'espacement (13) est fermement connecté au tourillon d'arbre (10).

10. Véhicule fourni avec un dispositif de retenue de capteur (26) selon l'une quelconque des revendications 1-9.
